# EUROPEAN PATENT APPLICATION

(11) **EP 4 755 343 A1**
(43) Date of publication of application: **10.06.2026**
(21) Application number: 24849298.5
(22) Date of filing: 02.08.2024
(51) Int. Cl.: A61C 13/00, A61C 5/70, A61C 8/00, A61C 13/083

(54) **MILL BLANK ASSEMBLY**

(30) Priority: 03.08.2023 JP 2023127374
(71) Applicant: Kuraray Noritake Dental Inc., Kurashiki-shi, Okayama 710-0801 (JP)
(72) Inventor: KONDO, Yusuke, Miyoshi-shi, Aichi 470-0293 (JP); NAKANO, Kirihiro, Miyoshi-shi, Aichi 470-0293 (JP); KASHIKI, Nobusuke, Miyoshi-shi, Aichi 470-0293 (JP); HIRAMATSU, Shogo, Miyoshi-shi, Aichi 470-0293 (JP); MATSUURA, Atsushi, Miyoshi-shi, Aichi 470-0293 (JP)
(74) Representative: D Young & Co LLP
(86) International application number: PCT/JP2024/027727
(87) International publication number: WO 2025/028653

(57) **Abstract**

The present invention provides a mill blank assembly that exhibits excellent processing accuracy through mitigation of vibrations generated during processing with a CAD/CAM processing machine. The present invention relates to a mill blank assembly comprising a workpiece portion, a holding portion, and an adhesive composition, and satisfying the following conditions (1) and/or (2):
(1) a cured product of the adhesive composition exhibits a loss factor tan δ of 0.70 or less at 20°C in an ultramicro indentation test (nanoindenter);
(2) the ratio (X1/Y1) of peel adhesion strength (X1) to fracture strain (Y1) in a compressive-shear adhesion test of the workpiece portion and the holding portion at 20°C is 1,200 N/mm or less.

## Description

### TECHNICAL FIELD

The present invention relates to a mill blank assembly comprising a workpiece portion, a holding portion, and an adhesive composition.

More specifically, the invention relates to a mill blank assembly comprising a workpiece portion, a holding portion, and an adhesive composition, capable of mitigating vibrations generated during processing with a CAD/CAM processing machine and thereby enhancing processing accuracy.

### BACKGROUND ART

A mill blank assembly used in dental applications is composed of a holding portion fixed to a processing machine, a workpiece, and an adhesive for bonding the holding portion and the workpiece. In order to enable production of the intended prosthesis by preventing the workpiece from becoming detached from the holding portion during processing, resins have been used as adhesives to strongly bond the holding portion and the workpiece (see, for example, Patent Literatures 1 to 3).

For example, Patent Literature 1 discloses a zirconia mill blank comprising an epoxy-based adhesive and a cyanoacrylate-based adhesive.

Patent Literature 2 discloses an adhesive composition containing 2-cyanoacrylic acid ester, together with a specific (meth)acrylate-based compound or a (meth)acrylamide-based compound.

Patent Literature 3 discloses a mill blank assembly in which the support portion has a specific surface roughness and surface properties to reduce the risk of detachment.

### CITATION LIST

### Patent Literature

Patent Literature 1: JP2020-151235 A
Patent Literature 2: JP2018-76272 A
Patent Literature 3: JP2020-068873 A

### SUMMARY OF INVENTION

### Technical Problem

The mill blank assemblies disclosed in Patent Literatures 1 to 3 use adhesive compositions with a high elastic modulus to achieve strong bonding.

However, the present inventors have found that, when the mill blank assemblies disclosed in Patent Literatures 1 to 3 are processed with a CAD/CAM processing machine, the vibrations caused by the rotation of the milling bur during processing cannot be adequately mitigated, resulting in reduced processing accuracy.

It is an object of the present invention to provide a mill blank assembly that exhibits excellent processing accuracy through mitigation of vibrations generated during processing with a CAD/CAM processing machine.

### Solution to Problem

The present inventors conducted intensive studies to find a solution to the foregoing issue, and found that vibrations generated during processing with a CAD/CAM processing machine can be mitigated by taking measures including maintaining the ratio of shear force at fracture and displacement at fracture within a predetermined range on a "stress-strain curve" in a compressive-shear adhesion test of the workpiece portion and the holding portion. Building upon this finding, the present inventors conducted additional examinations, ultimately resulting in the completion of the present invention.

The present invention includes the following.
[1] A mill blank assembly comprising a workpiece portion, a holding portion, and an adhesive composition, and satisfying the following conditions (1) and/or (2):
   (1) a cured product of the adhesive composition exhibits a loss factor tan δ of 0.70 or less at 20°C in an ultramicro indentation test (nanoindenter);
   (2) the ratio (X1/Y1) of peel adhesion strength (X1) to fracture strain (Y1) in a compressive-shear adhesion test of the workpiece portion and the holding portion at 20°C is 1,200 N/mm or less.
[2] The mill blank assembly according to [1], wherein a cured product of the adhesive composition exhibits a storage elastic modulus E' of 200 N/mm² or less at 20°C in an ultramicro indentation test.
[3] The mill blank assembly according to [1] or [2], wherein a cured product of the adhesive composition exhibits a loss elastic modulus E" of 100 N/mm² or less at 20°C in an ultramicro indentation test.
[4] The mill blank assembly according to [1], wherein the peel adhesion strength (X1) at 20°C is 100 N or more in the compressive-shear adhesion test.
[5] The mill blank assembly according to [1] or [4], wherein the fracture strain (Y1) at 20°C is 0.38 to 1.0 mm in the compressive-shear adhesion test.
[6] The mill blank assembly according to any one of [1] to [5], wherein the adhesive composition forms a layer held between the workpiece portion and the holding portion, and the layer has a thickness of 5 to 500 µm.
[7] The mill blank assembly according to any one of [1] to [6], wherein the workpiece portion has a Vickers hardness of 40 to 140 HV 5/30 as measured in compliance with JIS Z 2244:2009.
[8] The mill blank assembly according to any one of [1] to [7], wherein the adhesive composition comprises at least one selected from the group consisting of an epoxy-modified silicone compound, a (meth)acrylic compound, and a urethane-based compound, excluding cyanoacrylate compounds.
[9] The mill blank assembly according to any one of [1] to [8], wherein the workpiece portion comprises an oxide ceramic.
[10] The mill blank assembly according to any one of [1] to [9], wherein the workpiece portion comprises at least one selected from the group consisting of zirconia, alumina, and a glass-ceramic.
[11] The mill blank assembly according to any one of [1] to [10], wherein the holding portion comprises an aluminum alloy and/or an iron alloy.
[12] The mill blank assembly according to any one of [1] to [11], which is for dental use.
[13] A method for producing a mill blank assembly of any one of [1] to [12], comprising:
   a step of curing an adhesive composition to bond a workpiece portion and a holding portion,
   wherein the adhesive composition is any of the following, excluding cyanoacrylate compounds:
      (i) a mixture obtained by mixing an epoxy resin and a silicone-modified polymer;
      (ii) a mixture obtained by mixing a (meth)acryl monomer and/or a (meth)acryl oligomer with a modified silicone; or
      (iii) at least one type of urethane-based compound.

### Advantageous Effects of Invention

According to the present invention, a mill blank assembly can be provided that exhibits excellent processing accuracy through mitigation of vibrations generated during processing with a CAD/CAM processing machine.

Because vibrations during product transport can also be adequately mitigated, it is possible to reduce the amount of cushioning material when packaging the product, reducing environmental impact and enabling minimum packaging for the product box.

### BRIEF DESCRIPTION OF DRAWINGS

[FIG. 1] A schematic view representing a mill blank assembly according to an embodiment of the present invention.
[FIG. 2] A diagram explaining the "stress-strain curve" in a compressive-shear adhesion test of a mill blank assembly according to an embodiment of the present invention.

### DESCRIPTION OF EMBODIMENTS

A mill blank assembly of the present invention comprises a workpiece portion, a holding portion, and an adhesive composition, and satisfies the following conditions (1) and/or (2):
(1) a cured product of the adhesive composition exhibits a loss factor tan δ of 0.70 or less at 20°C in an ultramicro indentation test (nanoindenter);
(2) the ratio (X1/Y1) of peel adhesion strength (X1) to fracture strain (Y1) in a compressive-shear adhesion test of the workpiece portion and the holding portion at 20°C is 1,200 N/mm or less.

In this specification, the methods for measuring and calculating the loss factor tan δ at 20°C, the storage elastic modulus E' at 20°C, and the loss elastic modulus E" at 20°C in an ultramicro indentation test (nanoindenter) of the cured product of the adhesive composition are as described in the EXAMPLES below.

In this specification, the upper limits and lower limits of numeric ranges (for example, ranges of contents of components, ranges of values calculated from components, and ranges of physical properties) can be appropriately combined.

In a mill blank assembly of the present invention, the adhesive composition, with the minimum elastic properties required for processing and increased viscous properties, can mitigate vibrations generated during processing with a CAD/CAM processing machine, reducing differences in vibration frequency between the workpiece portion and the holding portion, thereby ensuring processing accuracy when producing a prosthesis by processing the workpiece portion.

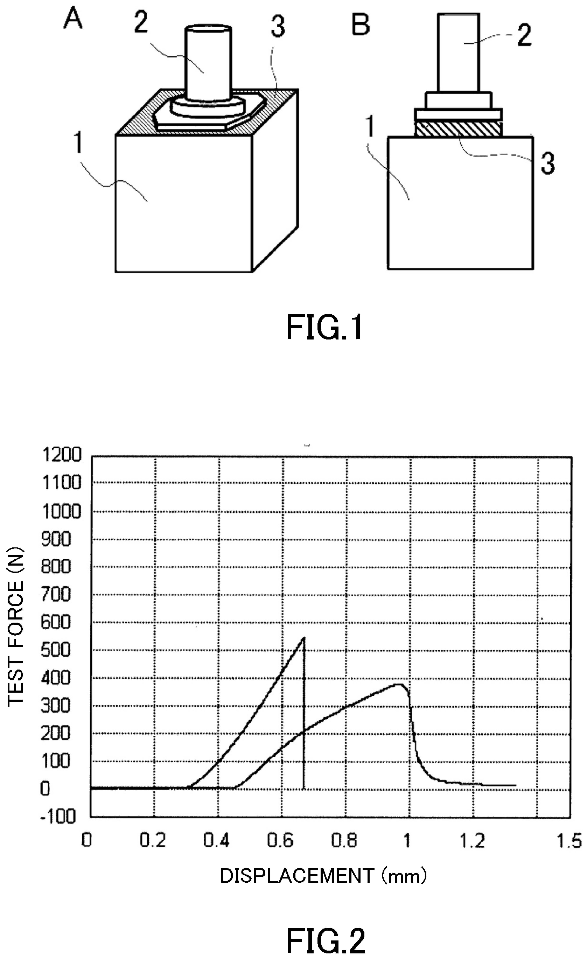

As shown in FIGS. 1A and 1B, a mill blank assembly of the present invention comprises a workpiece portion (1), a holding portion (2), and an adhesive composition (3).

As illustrated in FIG. 1B, the adhesive composition (3) may be applied only to the region corresponding to the bottom surface of the holding portion (2) as viewed along its axial direction. Alternatively, as indicated in FIG. 1A, the adhesive composition (3) may be applied to the entire surface of workpiece portion (1) to be bonded to the holding portion (2), or it may be applied to a portion of the holding portion (2). Each embodiment is described below.

In a certain embodiment, a mill blank assembly of the present invention comprises a workpiece portion, a holding portion, and an adhesive composition, and satisfies condition (1). In the following, this embodiment will be referred to as "First Embodiment."

Condition (1) specifies that a cured product of the adhesive composition exhibits a loss factor tan δ of 0.70 or less at 20°C in an ultramicro indentation test (nanoindenter).

The loss factor tan δ at 20°C is determined by tan δ = E"/E', where E' is the storage elastic modulus of the cured product of the adhesive composition at 20°C, and E" is the loss elastic modulus of the cured product of the adhesive composition at 20°C.

In the following, the loss factor tan δ at 20°C, the storage elastic modulus E' of the cured product of the adhesive composition at 20°C, and the loss elastic modulus E" of the cured product of the adhesive composition at 20°C refer to values measured and calculated for the cured product of the adhesive composition in an ultramicro indentation test.

In view of achieving high processing accuracy through mitigation of vibrations during processing, and reducing the likelihood of detachment between the workpiece and the holding portion or partial detachment of the workpiece during processing or transport, the storage elastic modulus E' of the cured product at 20°C (hereinafter, also referred to simply as "storage elastic modulus E'"), serving as an indicator of elasticity, is preferably 200 N/mm² or less, more preferably 150 N/mm² or less, even more preferably 120 N/mm² or less, most preferably 90 N/mm² or less.

Furthermore, in view of maintaining viscosity while providing the minimum elasticity required for processing and thereby mitigating vibrations generated during processing with a CAD/CAM processing machine and ensuring processing accuracy for the prosthesis, as well as reducing differences in vibration frequency between the workpiece portion and the holding portion during transport, the storage elastic modulus E' is preferably 5 N/mm² or more, more preferably 8 N/mm² or more, even more preferably 10 N/mm² or more.

As the storage elastic modulus E' of the cured product at 20°C decreases, the elastic properties of the cured product decrease and the viscous properties tend to increase. The viscoelasticity of the cured product can be adjusted accordingly, taking this into account.

In view of reducing the likelihood of detachment of the workpiece from the holding portion or partial detachment of the workpiece under low-temperature conditions, it is preferable that the storage elastic modulus E' at, for example, -30°C fall in the same range as storage elastic modulus E' at 20°C.

In view of maintaining viscosity while providing the minimum elasticity required for processing and thereby mitigating vibrations generated during processing with a CAD/CAM processing machine and ensuring processing accuracy for the prosthesis, as well as reducing differences in vibration frequency between the workpiece portion and the holding portion during transport, the loss elastic modulus E" of the cured product at 20°C (hereinafter, also referred to simply as "loss elastic modulus E""), serving as an indicator of viscosity, is preferably 100 N/mm² or less, more preferably 80 N/mm² or less, even more preferably 50 N/mm² or less.

In view of decreasing the elastic properties and increasing the viscous properties to help mitigate vibrations generated during processing with a CAD/CAM processing machine and thereby reducing differences in vibration frequency between the workpiece portion and the holding portion, the loss elastic modulus E" is preferably 0.5 N/mm² or more, more preferably 1 N/mm² or more, even more preferably 2 N/mm² or more.

In view of reducing the likelihood of detachment of the workpiece from the holding portion or partial detachment of the workpiece under low-temperature conditions, it is preferable that the loss elastic modulus E" at, for example, -30°C fall in the same range as loss elastic modulus E" at 20°C.

In view of achieving high processing accuracy through mitigation of vibrations during processing, and reducing the likelihood of detachment between the workpiece and the holding portion or partial detachment of the workpiece during processing or transport, the loss factor tan δ at 20°C measured in an ultramicro indentation test (hereinafter, also referred to simply as "loss factor tan δ at 20°C") is preferably 0.12 or more, more preferably 0.14 or more, even more preferably 0.15 or more. The loss factor tan δ is preferably 0.70 or less, more preferably 0.60 or less, even more preferably 0.55 or less, yet more preferably 0.50 or less.

In view of reducing the likelihood of detachment of the workpiece from the holding portion or partial detachment of the workpiece under low-temperature conditions, it is preferable that the loss factor tan δ at, for example, -30°C fall in the same range as loss factor tan δ at 20°C.

In view of reducing the likelihood of detachment of the workpiece from the holding portion or partial detachment of the workpiece under low-temperature conditions, it is preferable that the peak top of the loss factor tan δ, as it appears in a graph with measured temperature on the horizontal axis and measured tan δ at each temperature on the vertical axis, occurs in a lower temperature range than temperatures experienced by the mill blank during transport or storage. The peak top of loss factor tan δ occurs at a temperature preferably below 20°C, more preferably below 0°C, even more preferably below -30°C.

In another embodiment, a mill blank assembly of the present invention comprises a workpiece portion, a holding portion, and an adhesive composition, and satisfies condition (2). In the following, this embodiment will be referred to as "Second Embodiment."

In a mill blank assembly of the present invention, condition (2) specifies that the ratio (X1/Y1) of peel adhesion strength (X1) to fracture strain (Y1) in a compressive-shear adhesion test of the workpiece portion and the holding portion at 20°C is 1,200 N/mm or less (hereinafter, this peel adhesion strength is also referred to as "peel adhesion strength (X1)" or "peel adhesion strength (X1) at 20°C", and the fracture strain as "fracture strain (Y1)" or "fracture strain (Y1) at 20°C").

In view of achieving high processing accuracy through mitigation of vibrations during processing, the ratio (X1/Y1) of peel adhesion strength (X1) to fracture strain (Y1) is preferably 1,200 N/mm or less, more preferably 1,150 N/mm or less, even more preferably 1,100 N/mm or less, yet more preferably 1,000 N/mm or less, most preferably 900 N/mm or less.

In view of achieving high processing accuracy through mitigation of vibrations during processing, the ratio (X1/Y1) of peel adhesion strength (X1) to fracture strain (Y1) is preferably 550 N/mm or more, more preferably 600 N/mm or more.

The method for measuring peel adhesion strength (X1) and fracture strain (Y1) are as described in the EXAMPLES below.

With the ratio (X1/Y1) of peel adhesion strength (X1) to fracture strain (Y1) at 1,200 N/mm or less, the storage elastic modulus E' can be adjusted to a predetermined range.

When the ratio (X1/Y1) of peel adhesion strength (X1) to fracture strain (Y1) is within the foregoing range, it leads to characteristics where the "stress-strain curve" in the compressive-shear adhesion test exhibits a gentler slope, as shown by the line on the right side of FIG. 2, compared with related art (left side of FIG. 2) in which the holding portion abruptly separates from the workpiece portion. Additionally, abrupt separation of the holding portion from the workpiece portion can be restrained, reducing the likelihood of fracture in the workpiece portion, and allowing for gradual progression of peeling over time.

Owning to these characteristics, it becomes possible to mitigate vibrations during processing, and enhance the accuracy of processing with a CAD/CAM processing machine.

In view of reducing the likelihood of detachment of the workpiece from the holding portion or partial detachment of the workpiece even under low-temperature conditions, as well as achieving superior processing accuracy and high temperature stability, the ratio (X2/X1) of peel adhesion strength (X2) in a compressive-shear adhesion test of the workpiece portion and the holding portion after storage at -30°C (hereinafter, also referred to as "peel adhesion strength (X2)" or "peel adhesion strength (X2) after storage at - 30°C") with respect to peel adhesion strength (X1) at 20°C is preferably 80% or more, more preferably 85% or more, even more preferably 90% or more.

In view of reducing the likelihood of detachment between the workpiece and the holding portion during processing or transport, the peel adhesion strength (X1) is preferably 100 N or more, more preferably 150 N or more, even more preferably 200 N or more, most preferably 300 N or more.

In view of reducing the likelihood of detachment between the workpiece and the holding portion during processing or transport, it is preferable that the peel adhesion strength (X1) fall in the foregoing ranges irrespective of the measurement temperature.

For example, the peel adhesion strength (X2) after storage at -30°C preferably falls in the same range as peel adhesion strength (X1).

In view of achieving high processing accuracy through mitigation of vibrations during processing, and reducing the likelihood of detachment between the workpiece and the holding portion during processing or transport, the fracture strain (Y1) at 20°C is preferably 0.38 mm or more, more preferably 0.50 mm or more, even more preferably 0.55 mm or more.

In view of reducing strain during processing and achieving high processing accuracy, the fracture strain (Y1) is preferably 1.0 mm or less, more preferably 0.90 mm or less, even more preferably 0.80 mm or less.

In view of reducing the likelihood of detachment between the workpiece and the holding portion during processing or transport, it is preferable that the fracture strain (Y1) fall in the foregoing ranges irrespective of the measurement temperature.

For example, the fracture strain (Y2) in a compressive-shear adhesion test of the workpiece portion and the holding portion after storage at -30°C (hereinafter, also referred to as "fracture strain (Y2)" or "fracture strain (Y2) after storage at -30°C") preferably falls in the same range as fracture strain (Y1).

In a mill blank assembly of the present invention, the adhesive composition forms a layer held between the workpiece portion and the holding portion.

In view of the ease of maintaining the loss factor tan δ within the desired range in using the predetermined adhesive composition in First Embodiment and/or Second Embodiment, and/or the ease of maintaining the ratio (X1/Y1) of peel adhesion strength (X1) to fracture strain (Y1) within the desired range in Second Embodiment, the thickness of the layer is preferably 5 µm or more, more preferably 10 µm or more, even more preferably 15 µm or more.

In view of the ease of maintaining the loss factor tan δ within the desired range in using the predetermined adhesive composition in First Embodiment and/or Second Embodiment, and/or the ease of maintaining the ratio (X1/Y1) of peel adhesion strength (X1) to fracture strain (Y1) within the desired range in Second Embodiment, the thickness of the layer is preferably 500 µm or less, more preferably 300 µm or less, even more preferably 200 µm or less.

It should be noted here that the adhesive layer is considered to have no thickness variation because it is bonded under a constant load in the production of the mill blank assembly. Nevertheless, if any variation in thickness arises, the minimum thickness may be adopted as the thickness of the adhesive layer.

In a mill blank assembly of the present invention, in view of suitability for processing with a CAD/CAM processing machine and achieving mechanical strength adequate as a dental prosthesis, it is preferable in First Embodiment and/or Second Embodiment that the workpiece portion have a Vickers hardness of 40 HV 5/30 or more, more preferably 60 HV 5/30 or more, even more preferably 65 HV 5/30 or more, most preferably 70 HV 5/30 or more.

In view of suitability for processing with a CAD/CAM processing machine and achieving mechanical strength adequate as a dental prosthesis, it is preferable in First Embodiment and/or Second Embodiment that the workpiece portion have a Vickers hardness of 140 HV 5/30 or less, more preferably 135 HV 5/30 or less, even more preferably 130 HV 5/30 or less, most preferably 125 HV 5/30 or less.

The Vickers hardness can be measured in compliance with JIS Z 2244:2009.

The designation "HV 5/30" indicates that a load of 5 kgf is maintained for 30 seconds as a test force.

If the sample cracks or the indentation chips at HV 5/30, HV 1/10 may be employed instead.

Accordingly, the Vickers hardness of the workpiece portion may be read in this specification as indicating, for example, "preferably 40 HV 1/10 or more."

In the mill blank assemblies according to First Embodiment and/or Second Embodiment of the present invention, in view of the ease of maintaining the loss factor tan δ at 20°C and/or the ratio (X1/Y1) of peel adhesion strength (X1) to fracture strain (Y1) within the foregoing desired ranges, the adhesive composition preferably comprises at least one selected from the group consisting of an epoxy-modified silicone compound, a (meth)acrylic compound, and a urethane-based compound. In view of adequately mitigating vibrations generated during processing with a CAD/CAM processing machine and achieving high adhesive properties and water resistance while exhibiting superior processing accuracy, the adhesive composition more preferably comprises an epoxy-modified silicone compound.

The adhesive composition may be used alone, or two or more thereof may be used in combination. However, when a cyanoacrylate compound is used, it is not possible to sufficiently enhance viscous properties while reducing elastic properties, and the loss factor tan δ at 20°C and/or the ratio (X1/Y1) of peel adhesion strength (X1) to fracture strain (Y1) cannot be maintained within the foregoing desired ranges. For this reason, the adhesive composition is preferably free of a cyanoacrylate compound.

The adhesive composition may be either a one-pack or a two-pack type.

The epoxy-modified silicone compound is not particularly limited, provided that it is obtained by reacting a modified silicone resin and an epoxy resin. Any such compounds may be used.

The epoxy resin is not particularly limited, provided that the present invention can exhibit its effects. Known epoxy resins may be used (for example, such as bisphenol A-type epoxy resins).

The modified silicone resin is not particularly limited, provided that the present invention can exhibit its effects. Known modified silicone resins may be used.

The epoxy-modified silicone compound can form an island-in-sea structure in which the epoxy resin domains are dispersed within the flexible matrix phase of the modified silicone resin. Conceivably, this structure enables the compound to exhibit the superior adhesive properties of the epoxy resin while possessing the rubber-like elastic characteristic of the modified silicone resin after curing. Additionally, during the curing process, this structure gives rise to a morphology where the modified silicone resin forms a continuous phase and the epoxy resin is finely dispersed.

The epoxy-modified silicone compound used in the present invention may be a commercially available product, so long as the loss factor tan δ at 20°C and/or the ratio (X1/Y1) of peel adhesion strength (X1) to fracture strain (Y1) can be set within the foregoing desired ranges.

Examples of such commercially available products include elastic adhesives that exhibit rubber-like elasticity after curing, such as:
EP001K usable over a wide temperature range of -40 to 100°C (trade name, two-pack mixing type epoxy-modified silicone-based elastic adhesive, base: epoxy resin, curing agent: modified silicone polymer, Tg: -65°C, manufactured by Cemedine Co., Ltd.),
EP001N usable over a wide temperature range of -60 to 120°C (trade name, two-pack mixing type epoxy-modified silicone-based elastic adhesive, base: epoxy resin (bisphenol A-type epoxy resin), curing agent: modified silicone resin, manufactured by Cemedine Co., Ltd.),
Bond Eflex^{®} usable over a wide temperature range of -30 to 80°C (trade name, one-pack room-temperature-curing epoxy-modified silicone-based resin, manufactured by Konishi Co., Ltd.), and
Bond MOS-8 usable over a wide temperature range of -60 to 120°C (trade name, two-pack mixing type epoxy-modified silicone-based resin, manufactured by Konishi Co., Ltd.).

In view of the greater ease of mitigating vibrations generated during processing with a CAD/CAM processing machine, preferred are EP001K and EP001N.

In view of the ease of maintaining the loss factor tan δ at 20°C and/or the ratio (X1/Y1) of peel adhesion strength (X1) to fracture strain (Y1) within the foregoing desired ranges, examples of the (meth)acryl compound include (meth)acryl-modified silicone compounds, and butyl acrylate and 2-ethylhexyl acrylate, which have long alkyl side chains. Preferred among these are acryl-modified silicone compounds.

The (meth)acrylate compound may be a commercially available product, provided that the loss factor tan δ at 20°C and/or the ratio (X1/Y1) of peel adhesion strength (X1) to fracture strain (Y1) can be set within the foregoing desired ranges.

Examples of commercially available products include elastic adhesives that exhibit rubber-like elasticity after curing, such as Super X No. 8008 (trade name, one-pack room-temperature-curing acryl-modified silicone resin elastic adhesive, Tg: -63°C, manufactured by Cemedine Co., Ltd.).

A low-molecular (meth)acryl compound may be added to the (meth)acryl compound to shift the tan δ peak top toward the lower temperature side.

The urethane-based compound has urethane bonds, and, through the addition reaction (urethane reaction) between polyisocyanates and polyols, makes it possible to control the microphase-separated structure characteristic of urethane resins.

The microphase-separated structure is composed of two phases: a hard domain and a soft domain.

The hard domain acts as a hard segment containing urethane bonds with high cohesive energy due to hydrogen bonding, whereas the soft domain is composed of methylene chains, ethers, and ester linkages with low cohesive energy. This dual-phase structure with a hard domain and a soft domain provides high toughness and flexibility, enabling mitigation of vibrations generated during processing with a CAD/CAM processing machine.

The urethane-based compound may be a commercially available product, provided that the loss factor tan δ at 20°C and/or the ratio (X1/Y1) of peel adhesion strength (X1) to fracture strain (Y1) can be set within the foregoing desired ranges.

In First and Second Embodiments, the workpiece portion preferably comprises an oxide ceramic, more preferably a dental oxide ceramic.

Examples of the dental oxide ceramic include zirconia, alumina, and glass-ceramics. The dental oxide ceramic may be used alone, or two or more thereof may be used in combination.

When the dental oxide ceramic is zirconia, the zirconia may comprise a stabilizer capable of preventing a phase transformation of zirconia (hereinafter, also referred to as "stabilizer"). Preferably, the stabilizer is one capable of forming partially-stabilized zirconia.

The zirconia in the workpiece portion may be a zirconia molded body or a zirconia pre-sintered body.

The zirconia molded body is produced by applying external force to a powder containing zirconia-based particles. Being in an unfired state, it refers to a material in which necking has not occurred.

When producing a zirconia molded body using a method that includes the step of press molding a powder containing zirconia particles, the specific method of press molding is not particularly limited, and this can be achieved using a known press molding machine.

The zirconia pre-sintered body can be a precursor (intermediate product) of a zirconia sintered body. In this specification, "zirconia pre-sintered body" refers to a state where zirconia particles have formed necks between particles but have not been fully sintered. The zirconia pre-sintered body can be obtained by pre-sintering the zirconia molded body.

In order to ensure block formation, the firing temperature (pre-sintering temperature) in the pre-sintering step is, for example, preferably 800°C or more, more preferably 900°C or more, even more preferably 950°C or more. The pre-sintering temperature is, for example, preferably less than 1,200°C, more preferably 1,150°C or less, even more preferably 1,100°C or less.

Examples of the stabilizer include oxides such as calcium oxide (CaO), magnesium oxide (MgO), yttria (Y₂O₃), cerium oxide (CeO₂), scandium oxide (Sc₂O₃), niobium oxide (Nb₂O₅), lanthanum oxide (La₂O₃), erbium oxide (Er₂O₃), praseodymium oxide (PreO₁₁, Pr₂O₃), samarium oxide (Sm₂O₃), europium oxide (Eu₂O₃), and thulium oxide (Tm₂O₃). Yttria is preferred in view of achieving superior translucency in the zirconia sintered body after sintering.

In view of achieving superior translucency in the zirconia sintered body, the content of the stabilizer (preferably, yttria) in the zirconia is preferably 3.0 mol% or more, more preferably 3.5 mol% or more, even more preferably 4.0 mol% or more with respect to the total moles of zirconia (zirconium(IV) oxide, or ZrO₂) and the stabilizer. When the stabilizer content is 3.0 mol% or more, the cubic crystal system becomes more abundant in the crystal forms present in the sintered body, making it possible to enhance the translucency of the zirconia sintered body. The stabilizer content is preferably 7.5 mol% or less, more preferably 7.0 mol% or less, even more preferably 6.5 mol% or less. When the stabilizer content is 7.5 mol% or less, it is possible to reduce a decrease in the strength of the zirconia sintered body. The stabilizer content may fall in any combination of these ranges.

In First and Second Embodiments, materials such as aluminum alloys and iron alloys may be used for the holding portion, and the material is not particularly limited as long as the workpiece portion can be secured. Examples of such materials include aluminum and its alloys, iron and its alloys, pure iron, cast iron, stainless steel (such as SUS304, SUS316), nickel alloys (such as Alumel, Chromel), chromium alloys, cobalt alloys, carbon steel, manganese steel (such as SMn420, SMn433, SMn438, SMn443), invar alloys, molybdenum, copper, bronze, silver, gold, and platinum. These alloys may be used without restriction on their compositions, provided that they are included among those recognized as the alloys listed above. For example, in the case of cobalt alloys, the cobalt content may be 42 to 65%. Among the aforementioned materials, preferred for use are those with a coefficient of thermal expansion similar to that of the workpiece portion. The material of the holding portion may be used alone, or two or more thereof may be used in combination.

A mill blank assembly of the present invention is particularly suitable for dental applications.

An example of a method for producing a mill blank assembly of the present invention comprises a step of curing an adhesive composition to bond a workpiece portion and a holding portion,
wherein the adhesive composition is any of the following, excluding cyanoacrylate compounds:
(i) a mixture obtained by mixing an epoxy resin and a silicone-modified polymer;
(ii) a mixture obtained by mixing a (meth)acryl monomer and/or a (meth)acryl oligomer with a modified silicone; or
(iii) at least one type of urethane-based compound.

The mixture obtained by mixing an epoxy resin and a silicone-modified polymer in embodiment (i) of the adhesive composition is not particularly limited, and commercially available products may be used, provided that they serve as epoxy-modified silicone compounds, and the loss factor tan δ and/or the ratio (X1/Y1) of peel adhesion strength (X1) to fracture strain (Y1) can be adjusted to the foregoing desired ranges.

The mixture obtained by mixing at least two of an acryl monomer and/or a (meth)acryl oligomer in embodiment (ii) of the adhesive composition is not particularly limited, and commercially available products (preferably, such as acryl-modified silicone compounds) may be used, provided that the loss factor tan δ and/or the ratio (X1/Y1) of peel adhesion strength (X1) to fracture strain (Y1) can be adjusted to the foregoing desired ranges.

At least one type of urethane-based compound in embodiment (iii) of the adhesive composition is not particularly limited, and commercially available products may be used, provided that the loss factor tan δ and/or the ratio (X1/Y1) of peel adhesion strength (X1) to fracture strain (Y1) can be adjusted to the foregoing desired ranges.

The step of curing an adhesive composition to bond a workpiece portion and a holding portion is not particularly limited, and bonding can be achieved using known methods.

As shown in FIGS. 1A and 1B, the application area of the adhesive composition is not particularly limited, and can be selected as appropriate, provided that it enables bonding between the workpiece portion and the holding portion, and satisfies the condition (1) and/or condition (2).

The amount of the adhesive composition to be applied can be appropriately selected so that the adhesive layer after curing lies within the desired area.

The present invention encompasses embodiments combining all or part of the features of the foregoing embodiments in various ways within the technical idea of the present invention, provided that the present invention can exhibit its effects.

The present invention also encompasses an embodiment satisfying both condition (1) and condition (2) (an embodiment in which the loss factor tan δ at 20°C falls within the foregoing desired ranges, and the ratio (X1/Y1) of peel adhesion strength (X1) to fracture strain (Y1) remains within the desired ranges specified above).

### EXAMPLES

The following describes the present invention in greater detail by way of Examples. It should be noted, however, that the present invention is in no way limited by the following Examples, and various changes may be made by a person with ordinary skill in the art within the technical idea of the present invention.

The following adhesives were used in the Examples and Comparative Example described below.
Epoxy-modified silicone-based resin EP001K: two-pack mixing type epoxy-modified silicone-based elastic adhesive (trade name: EP001K, base: epoxy resin, curing agent: modified silicone polymer, Tg: -65°C, manufactured by Cemedine Co., Ltd.)
Epoxy-modified silicone-based resin EP001N: two-pack mixing type epoxy-modified silicone-based elastic adhesive (trade name: EP001N, manufactured by Cemedine Co., Ltd.)
Epoxy-modified silicone-based resin MOS-8: two-pack mixing type epoxy-modified silicone-based elastic adhesive (trade name: Bond MOS-8, manufactured by Konishi Co., Ltd.)
Epoxy-based resin High-Super 5: two-pack type epoxy-based adhesive (trade name: High-Super 5, manufactured by Cemedine Co., Ltd.)
Cyanoacrylate-based resin Aron Alpha 403X: cyanoacrylate-based adhesive (trade name: Aron Alpha 403X, manufactured by Toagosei Co., Ltd.)
Each of these adhesives was used by mixing the base and the curing agent as instructed by the manual attached to the product, and applying the mixture to the predetermined position of the holding portion after several minutes following the mixing of the base and the curing agent.

### [Example 1]

The workpiece portion, the holding portion, and the adhesive composition listed in Table 1 were used.

At room temperature (20°C), the epoxy-modified silicone was applied to the workpiece portion to form an adhesive layer that, after curing, exhibits the thickness shown in Table 1. After attaching the holding portion, the adhesive composition was cured at room temperature under an applied load to achieve the predetermined adhesive layer thickness, thereby producing a mill blank assembly.

The mill blank assembly, along with the material-the workpiece portion or the adhesive composition-were evaluated for their physical properties using the methods below. The evaluation results for these properties are presented in Table 1.

### [Examples 2 to 5 and Comparative Example 1]

The mill blank assemblies were produced in the same manner as in Example 1, except for changing the workpiece portion, holding portion, adhesive composition, and adhesive layer thickness to those shown in Table 1.

### [Measurement of Vickers Hardness of Workpiece Portion]

The Vickers hardness of the workpiece portion was measured in compliance with JIS Z 2244:2009.

Using a micro/macro Vickers hardness tester (Falcon 500 manufactured under this trade name by Innovatest Japan), a 5 kgf load was maintained for 30 seconds, and the HV value was calculated (arithmetic mean for n = 10).

### [Thickness Measurement for Cured Product (Adhesive Layer) of Adhesive Composition]

The mill blank assembly prepared was cut, and the thickness of the cured product of the adhesive composition at the cleaved surface was measured as the adhesive layer thickness. For the measurement of the adhesive layer thickness of the cured adhesive composition, a light microscope (DIGITAL MICROSCOPE KH-7700, Hirox Co., Ltd.) was used for observation (n = 1).

Since a constant load was applied for bonding in producing the mill blank assembly, the adhesive layer thickness was regarded as having no thickness variation.

### [Measurement of Dynamic Viscoelasticity by Ultramicro Indentation Test (Nanoindenter)]

Dynamic viscoelasticity was measured with an ultramicro indentation hardness tester (ENT-5X manufactured by Elionix Inc.) according to the following method.

The holding portion was removed from the mill blank assembly prepared, and only the portion of the cured product of the adhesive composition remaining on the holding portion side was used for the measurement.

For the measurement, an ultramicro indentation hardness tester (ENT-5X manufactured by Elionix Inc.) was used, and the cured product of the adhesive composition was measured for storage elastic modulus E' and loss elastic modulus E" under the conditions below. From the measured values, the loss factor tan δ = E"/E' was calculated.

For each Example and Comparative Example, a single specimen was measured at each set temperature to collect data from three points spaced 100 µm apart, and the arithmetic mean of data from these three points was calculated.

### <Measurement Conditions>

Test load: 200 µN
Loading and unloading time: 10 sec (500 steps, 20 ms step interval)
Load hold time: 5 sec
Oscillation frequency: 1.0 Hz
Oscillation time: 10 sec
Amplitude: 20 µN
Set temperature: 20°C and -30°C
Indenter: Berkovich indenter
Correction method in analysis: Oliver method

### [Compressive-Shear Adhesion Test: Measurement of Peel Adhesion Strength]

The holding portion 2 was fixed (from the side after 90° rotation relative to FIG. 1B), and a load was applied (in the vertical direction) to the workpiece portion 1 with a support roller at a position 18 mm away from the bonding surface (the surface bonded to the workpiece portion). The load at which the workpiece portion 1 separated from the holding portion 2 was then measured with a tabletop precision universal testing machine (Autograph AGS-5kNX manufactured by Shimadzu Corporation). The support roller was lowered at a speed of 1.0 mm/s.

The peel adhesion strength was measured after leaving the workpiece portion 1 and holding portion 2 at 20°C for 1 day following bonding, or after leaving the workpiece portion 1 and holding portion 2 at 20°C for 1 day, -30°C for 1 day, and 20°C for 1 day following bonding (arithmetic mean for n = 5).

The mill blank assemblies measured for peel adhesion strength had a bonding area of 317 [mm²] (the area of holding portion 2 bonded to the workpiece portion 1). The bonding area was calculated from the total surface area of holding portion 2 bonded to the workpiece portion 1 (the area of holding portion 2 that overlaps the workpiece portion 1 when FIG. 1B is viewed in vertical plan).

In view of reducing the likelihood of the workpiece detaching from the holding portion while processing the workpiece portion, the preferred peel adhesion strength (X1) at 20°C is 100 N or more, more preferably 150 N or more, even more preferably 200 N or more, most preferably 300 N or more.

The preferred peel adhesion strength (X2) at -30°C lies within the same range as that of peel adhesion strength (X1) at 20°C.

### [Compressive-Shear Adhesion Test: Measurement of Fracture Strain]

Displacement was read from a graph of stress-strain curves obtained in the foregoing section [Compressive-Shear Adhesion Test: Measurement of Peel Adhesion Strength], and this displacement was taken as the fracture strain (arithmetic mean for n = 5).

As with the peel adhesion strength, the fracture strain was measured after leaving at 20°C for 1 day following bonding, or after leaving at 20°C for 1 day, -30°C for 1 day, and 20°C for 1 day following bonding (arithmetic mean for n = 5).

In view of achieving high processing accuracy through mitigation of vibrations during processing, and reducing the likelihood of detachment between the workpiece and the holding portion during processing or transport, the preferred fracture strain (Y1) at 20°C is 0.38 mm or more, more preferably 0.50 mm or more, even more preferably 0.55 mm or more.

In view of reducing strain during processing and achieving high processing accuracy, the preferred fracture strain (Y1) is 1.0 mm or less, more preferably 0.90 mm or less, even more preferably 0.80 mm or less.

The preferred fracture strain (Y2) at -30°C lies within the same range as that of fracture strain (Y1) at 20°C.

### [Evaluation of Processing Accuracy]

The mill blank assembly obtained was cut into the predetermine shape of a dental prosthesis using a milling machine (DWX-52DC, manufactured under this trade name by Roland DG Corporation) with an unused KATANA^{®} Drill (manufactured by Kuraray Noritake Dental Inc., Ø = 2 mm, no diamond coating), following three-dimensional NC data (arithmetic mean for n = 10).

Processing accuracy was evaluated according to the following criteria.
A: Processing resulted in dental prostheses achieving the target dimensions.
B: Dental prostheses failed to achieve the target dimensions in one instance.
C: Dental prostheses failed to achieve the target dimensions in two or more instances.
D: Dental prostheses failed to achieve the target dimensions in all instances.

**[Table 1]**

| | | | Ex. 1 | Ex. 2 | Ex. 3 | Ex. 4 | Ex. 5 | Com. Ex. 1 |
|---|---|---|---|---|---|---|---|---|
| Workpiece portion | Material | | Zirconia | Zirconia | Zirconia | Zirconia | Zirconia | Zirconia |
| | Vickers hardness [Hv 5/30] | | 76 | 76 | 76 | 76 | 76 | 76 |
| Holding portion | Material | | Aluminum alloy | Aluminum alloy | Aluminum alloy | Aluminum alloy | Iron alloy | Aluminum alloy |
| Adhesive composition | Product name | | EP001K | EP001K | EP001N | MOS8 | EP001K | High-Super 5 + Aron Alpha 403X |
| | Type | | Epoxy-modified silicone-based | Epoxy-modified silicone-based | Epoxy-modified silicone-based | Epoxy-modified silicone-based | Epoxy-modified silicone-based | Epoxy-based + cyanoacrylate-based |
| Adhesive thickness [µm] | | | 20 | 100 | 20 | 20 | 20 | 20 |
| Bonding area [mm²] | | | 317 | 317 | 317 | 317 | 317 | 317 |
| Compressive-shear adhesion test | Evaluation after storage at 20°C | Peel adhesion strength (X1) [N] | 440 | 750 | 425 | 401 | 449 | 520 |
| | | Fracture strain (Y1) [mm] | 0.65 | 0.80 | 0.70 | 0.75 | 0.65 | 0.35 |
| | | (X1/Y1) [N/mm] | 677 | 938 | 607 | 535 | 691 | 1486 |
| | Evaluation after storage at -30°C | Peel adhesion strength (X2) [N] | 385 | 702 | 384 | 368 | 402 | 56 |
| | | Fracture strain (Y2) [mm] | 0.60 | 0.75 | 0.65 | 0.70 | 0.60 | - |
| | | (X2/Y2) [N/mm] | 642 | 936 | 591 | 526 | 670 | - |
| | (X2/X1)[%] | | 88 | 94 | 90 | 92 | 90 | 10.8 |
| Nanoindenter test | Evaluation at 20°C | Storage elastic modulus E' [N/mm²] | 45.8 | 45.8 | 18.4 | 12.3 | 45.8 | 703 |
| | | Loss elastic modulus E" [N/mm²] | 10.2 | 10.2 | 4.08 | 2.01 | 10.2 | 550 |
| | | Loss factor tan δ | 0.223 | 0.223 | 0.222 | 0.163 | 0.223 | 0.782 |
| | Evaluation at -30°C | Storage elastic modulus E' [N/mm²] | 83.8 | 83.8 | 30.8 | 24.2 | 83.8 | 4750 |
| | | Loss elastic modulus E" [N/mm²] | 23.5 | 23.5 | 9.55 | 10.9 | 23.5 | 525 |
| | | Loss factor tan δ | 0.280 | 0.280 | 0.310 | 0.450 | 0.280 | 0.111 |
| Processing accuracy | | After storage at 20°C | A | B | A | B | A | C |
| | | After storage at -30°C | A | B | A | B | A | D |

These results confirmed that a mill blank assembly of the present invention can adequately mitigate vibrations generated under various conditions, including during processing with a CAD/CAM processing machine, and exhibits excellent processing accuracy.

### INDUSTRIAL APPLICABILITY

A mill blank assembly of the present invention is useful in dental applications, and it can adequately mitigate vibrations caused by the rotation of a milling bur during processing, providing excellent processing accuracy.

A mill blank assembly of the present invention can also adequately mitigate vibrations during product transport, making it possible to reduce the amount of cushioning material when packaging the product, reducing environmental impact and enabling minimum packaging for the product box.

### Reference Signs List

- 1: Workpiece portion
- 2: Holding portion
- 3: Adhesive composition

## Claims

1. A mill blank assembly comprising a workpiece portion, a holding portion, and an adhesive composition, and satisfying the following conditions (1) and/or (2):
(1) a cured product of the adhesive composition exhibits a loss factor tan δ of 0.70 or less at 20°C in an ultramicro indentation test (nanoindenter);
(2) the ratio (X1/Y1) of peel adhesion strength (X1) to fracture strain (Y1) in a compressive-shear adhesion test of the workpiece portion and the holding portion at 20°C is 1,200 N/mm or less.

2. The mill blank assembly according to claim 1, wherein a cured product of the adhesive composition exhibits a storage elastic modulus E' of 200 N/mm² or less at 20°C in an ultramicro indentation test.

3. The mill blank assembly according to claim 1 or 2, wherein a cured product of the adhesive composition exhibits a loss elastic modulus E" of 100 N/mm² or less at 20°C in an ultramicro indentation test.

4. The mill blank assembly according to claim 1, wherein the peel adhesion strength (X1) at 20°C is 100 N or more in the compressive-shear adhesion test.

5. The mill blank assembly according to claim 1 or 4, wherein the fracture strain (Y1) at 20°C is 0.38 to 1.0 mm in the compressive-shear adhesion test.

6. The mill blank assembly according to claim 1, 2, or 4, wherein the adhesive composition forms a layer held between the workpiece portion and the holding portion, and the layer has a thickness of 5 to 500 µm.

7. The mill blank assembly according to claim 1, 2, or 4, wherein the workpiece portion has a Vickers hardness of 40 to 140 HV 5/30 as measured in compliance with JIS Z 2244:2009.

8. The mill blank assembly according to claim 1, 2, or 4, wherein the adhesive composition comprises at least one selected from the group consisting of an epoxy-modified silicone compound, a (meth)acrylic compound, and a urethane-based compound, excluding cyanoacrylate compounds.

9. The mill blank assembly according to claim 1, 2, or 4, wherein the workpiece portion comprises an oxide ceramic.

10. The mill blank assembly according to claim 1, 2, or 4, wherein the workpiece portion comprises at least one selected from the group consisting of zirconia, alumina, and a glass-ceramic.

11. The mill blank assembly according to claim 1, 2, or 4, wherein the holding portion comprises an aluminum alloy and/or an iron alloy.

12. The mill blank assembly according to claim 1, 2, or 4, which is for dental use.

13. A method for producing a mill blank assembly of claim 1, 2, or 4, comprising:
a step of curing an adhesive composition to bond a workpiece portion and a holding portion,
wherein the adhesive composition is any of the following, excluding cyanoacrylate compounds:
(i) a mixture obtained by mixing an epoxy resin and a silicone-modified polymer;
(ii) a mixture obtained by mixing a (meth)acryl monomer and/or a (meth)acryl oligomer with a modified silicone; or
(iii) at least one type of urethane-based compound.
